# EUROPEAN PATENT SPECIFICATION

(11) **EP 3 259 982 B1**
(45) Date of publication and mention of the grant of the patent: **08.05.2019**
(21) Application number: 17176538.1
(22) Date of filing: 19.06.2017
(51) Int. Cl.: A01G 9/14

(54) **TUBE RAIL CART**
ROHRSCHIENENWAGEN
CHARIOT DE RAIL DE TUBE

(30) Priority: 21.06.2016 BE 201605453
(43) Date of publication of application: 27.12.2017
(73) Proprietor: B&A Automation BVBA, 2320 Hoogstraten (BE)
(72) Inventor: Bogaerts, Joris, 2960 Brecht (BE)
(74) Representative: Van hunsel, Lieven M.S.

(56) References cited:
- EP-A1- 2 633 751
- EP-A1- 2 724 610
- NL-C- 2 009 716
- NL-C2- 1 016 505

## Description

The present invention concerns a tube rail cart.

More specifically the invention concerns a tube rail cart designed to ride over tubes in a horticultural greenhouse, whereby the tube rail cart is provided with a platform on which a person can stand, drive means for advancing the tube rail cart over the tubes and control means with which a person can control the drive means and whereby the platform is provided with a safety guard.

The tubes are typical heating tubes for horticulture greenhouses that also serve as rails for such a tube rail cart.

Such tube rail carts are obviously intended for providing heat for the plants in the horticultural greenhouse and/or for plucking the fruits or vegetables growing on these plants.

Such tube rail carts are already known according to the present state of the art that depending on the design can be provided with more or less sophisticated technology for their propulsion. Examples of tube rail carts may be found in EP2724610 and EP2633751.

These known tube rail carts do, however, have an important disadvantage in that the minimum height at which a person can stand on the platform is still quite high above the level of the abovementioned tubes.

Under the platform there are indeed parts of the drive means of the tube rail cart and other mechanisms for moving the platform up and down, so the platform cannot be brought below a certain height.

This means that working with such a tube rail cart on the parts of the plants near the ground in the horticultural greenhouse is very difficult or even impossible.

Accordingly, the present invention aims to provide a solution to the abovementioned problem and/or other problems.

More specifically, it is a purpose of the invention to provide a tube rail cart that allows to bring the user's feet to a height at the level of the tubes on which the tube rail is located or at least to practically this height.

In addition, a purpose of the invention is to provide an extremely safe solution, whereby more specifically the user is prevented from falling from the platform by accidentally losing his/her footing.

Another purpose of the invention consists of providing an adapted tube rail cart that as regards size differs little or not at all from the existing tube rail carts or that can be brought to such a size.

Yet another purpose of the invention consists of supplying an adapted tube rail cart that is very practical in use while being easy to control in all platform positions.

The present invention concerns a tube rail cart intended to ride over tubes of a horticultural greenhouse, with these tubes serving as rails, whereby the tube rail cart is provided with a platform on which a person can stand, drive means for advancing the tube rail cart over the tubes and control means with which a person can control the drive means, and whereby the platform is provided with a safety guard, whereby according to the invention the platform has a central platform section that can be moved up and down, whereby to the side of this central platform section of the platform at least one lateral platform section has adjusting means to move said lateral platform section up and down, with these adjusting means allowing the level of the lateral platform to be lowered to below the level of the central platform section.

The intention of such a tube rail cart according to the invention is that the level of the lateral platform section can be brought to a height more or less at the level of the horticultural greenhouse tubes.

A big advantage of such a tube rail cart according to the invention is that it can also be used for working on the lower parts of the plants.

Another advantage of such a tube rail cart according to the invention is that by making use of one or two lateral platform sections, the drive means and other mechanisms of the tube rail cart can still be fitted under the central platform section, just as with the known tube rail carts. Consequently, technology used in existing tube rail carts can still be used.

An adaptation must, however, be made to the side parts of the tube rail cart and to its control means.

In a preferred embodiment of a tube rail cart according to the invention, the adjusting means are such that they allow the level of the lateral platform section to lower to below the level of the central platform section, when the central platform section is placed in the lowest position.

Such an embodiment of a tube rail cart according to the invention has the advantage that the tube rail cart is in a very stable state for working on the lower parts of the plants in the lowest position, considering the user can stand on the lateral platform section when it is brought to a position below the level of the central platform section, when this central platform section is placed in the lowest position.

In yet another preferred embodiment of a tube rail cart according to the invention, the lateral platform section has a floor part on which a person can stand, whereby a pedal is integrated in the floor part with which the movement or stopping of the tube rail cart can be controlled.

A big advantage of such a tube rail cart according to the invention is that moving and stopping the tube rail cart is very simple, also when a user stands on the lateral platform section, considering control can take place by a simple foot movement to operate the abovementioned pedal in the floor part of the lateral platform.

In yet another preferred embodiment of a tube rail cart according to the invention the floor part of the lateral platform is suspended on a construction above by means of a scissor mechanism.

Such an embodiment of a tube rail cart according to the invention offers the advantage that the height of the floor part can be set very efficiently and safely using the scissor mechanism.

Moreover, such an embodiment of a tube rail cart according to the invention allows the lateral platform section to be simply folded away in or under the central platform section.

To this end, a tube rail cart according to the invention is preferably constructed in such a way that the lateral platform section forms a telescopic part that can be fully slid in and out of the central part.

More specifically, in a preferred embodiment of a tube rail cart according to the invention the abovementioned upper construction of the lateral platform section can be slid into the central platform section and slid out from the central platform section.

In an even more preferred embodiment of a tube rail cart according to the invention, the upper construction can be slid into and out of the central platform section, when the floor part is brought to the same level as the upper construction by fully folding in the scissor mechanism.

It is clear that with such embodiments of a tube rail cart according to the invention a very compact vehicle is obtained, considering the lateral platform section or the lateral platform sections can be stowed in or under the central platform section when they are not used, for example when no work has to be done on the plants at the very lowest level.

In another preferred embodiment of a tube rail cart according to the invention the tube rail cart has provisions for erecting a safety guard for a person standing on the lateral platform section.

Obviously such provisions in such an embodiment of a tube rail cart according to the invention contribute greatly to safety during its use, more specifically when a person is standing on the lateral platform section.

The abovementioned provisions for erecting a safety guard on a tube rail cart according to the invention are preferably provided in two parts.

Such an embodiment of a tube rail cart according to the invention allows the safety guard to be closed in two stages behind a person standing on the lateral platform section, so the safety guard formed is easy to use and does not obstruct reaching the lateral platform section.

Moreover, such two-part provisions can be easily stowed away, as illustrated in the figures below.

Another preferred characteristic of a tube rail cart according to the invention consists of the tube rail cart being provided with a control panel on the central part of the tube rail cart that is also simple to operate from the lateral platform section, in whatever position of this lateral platform section.

Consequently, a tube rail cart according to the invention is easy to control in all circumstances.

With the intention of better showing the characteristics of the invention, a preferred embodiment of a tube rail cart according to the invention is described hereinafter by way of an example, without any limiting nature, with reference to the accompanying drawings, wherein:
figure 1 shows a side view of a tube rail cart according to the invention;
figure 2 shows on a larger scale the part indicated in figure 1 with F2;
figure 3 shows a perspective view of a part of the tube rail cart from figure 1 according to arrows F3 and with the removal of certain parts of the tube rail cart; and
figure 4 shows a perspective view of parts of the tube rail cart from figure 1 according to arrow F4.

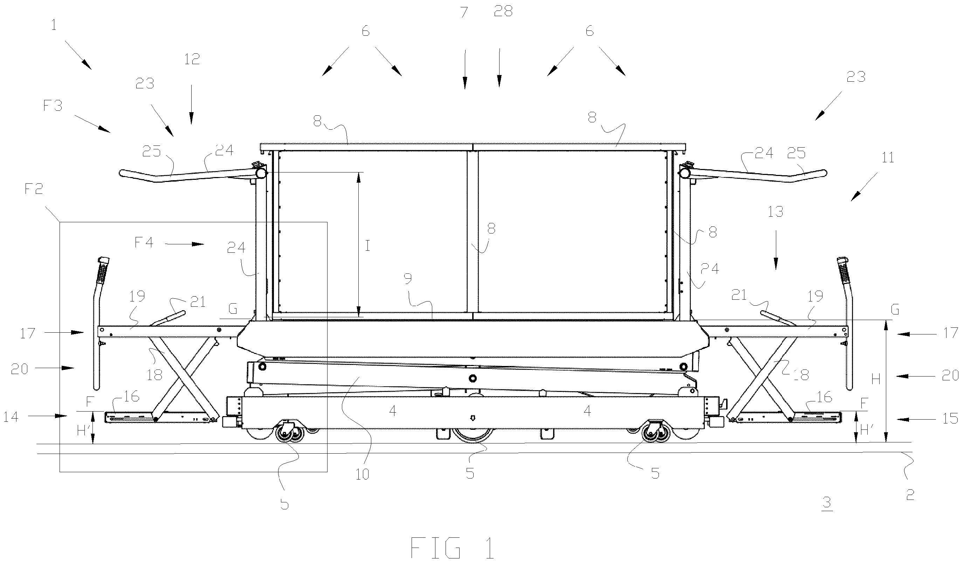

The tube rail cart 1 shown in figures 1 to 4 is intended to ride over tubes 2 of a horticultural greenhouse 3.

These tubes 2 are typically heating tubes for the horticultural greenhouse 3 that are laid alongside each other between the rows of plants in pairs through the horticultural greenhouse and serve as rails for the tube rail cart 1.

The tube rail cart 1 rests with its chassis 4 that is provided with wheels 5 on the tubes 2.

The chassis 4 incorporates drive means such as an electric motor or suchlike for driving the tube rail cart 1 that are not shown in the figures below.

The tube rail cart 1 further has a platform 6 or work surface on which a person can stand while working on plants in the horticultural greenhouse 3.

According to the invention this platform 6 has a central platform section 7 that in this case has dimensions corresponding to the dimensions of the chassis 4 and that is surrounded by a safety guard 8, so a person standing on the floor 9 of this central platform section 7 cannot accidently step off the central platform section 7.

The central platform section is connected by means of a scissor mechanism 10 to the chassis 4 of the tube rail cart 1 to form a scissor lift 11, so the central platform section 7 is adjustable in height in relation to the chassis 4.

Therefore work can be easily done on the higher parts of the plants in the horticultural greenhouse 3.

It is, however, clear that when the scissor mechanism 10 is fully folded in, as is the case in figure 1, the floor 9 of the central platform section 7 is located at a minimum height H above the tubes 2.

This minimum height H can vary from several tens of centimetres to a meter and more.

Consequently, for a person standing on the floor 9 of the central platform section 7 it is far from practical to work on the lower parts of the plants near the tubes 2.

The invention provides a very practical solution to this, that is described in more detail below.

According to the invention, to the side of the central platform section 7 of the platform 6 at least one lateral platform section is provided.

In the figures, two such lateral platform sections 12 and 13 are provided, more specifically a first lateral platform section 12 on the front 14 of the tube rail cart 1 and a second lateral platform section 13 on the rear 15 of the tube rail cart 1.

Both lateral platform sections 12 and 13 are identical in form and also extend above the space between the tubes 2 and they therefore fit between the rows of plants, just like the central platform section 7.

Each lateral platform section 12 or 13 has a floor part 16 on which a person can stand.

This floor part 16 of each lateral platform section 12 or 13 is suspended on a construction above 17 by means of a scissor mechanism 18.

The constructions above 17 have a pair of beams 19 that extend sideways from the central platform section 7 in the horizontal direction, more or less at the height of the floor 9 of the central platform section 7.

These beams 19 may or may not be connected to each other to form a frame.

Obviously totally different constructions are not excluded from the invention.

The scissor mechanism 18 and the construction above 17 of each lateral platform section 12 and 13 form adjusting means 20 for moving the relative lateral platform section 12 or 13 or at least parts of thereof up and down.

These adjusting means 20 allow the lowering of the level of the lateral platform sections 12 and 13, more specifically level F of the relative floor part 16, to below level G of the central platform section 7, more specifically below level G of the floor 9 of this central platform section 7 and this even when the central platform section 7 is placed in the lowest position.

The adjusting means 20 also each have a lever 21 with which the height or level F of the floor part 16 of a lateral platform section 12 or 13 can be set with respect to the central platform section 7.

These levers 21 engage in the scissor mechanism 18, whereby the scissor mechanism 18 is folded together to a greater or lesser extent as the floor part 16 is to be brought either closer to or further from the construction above 17.

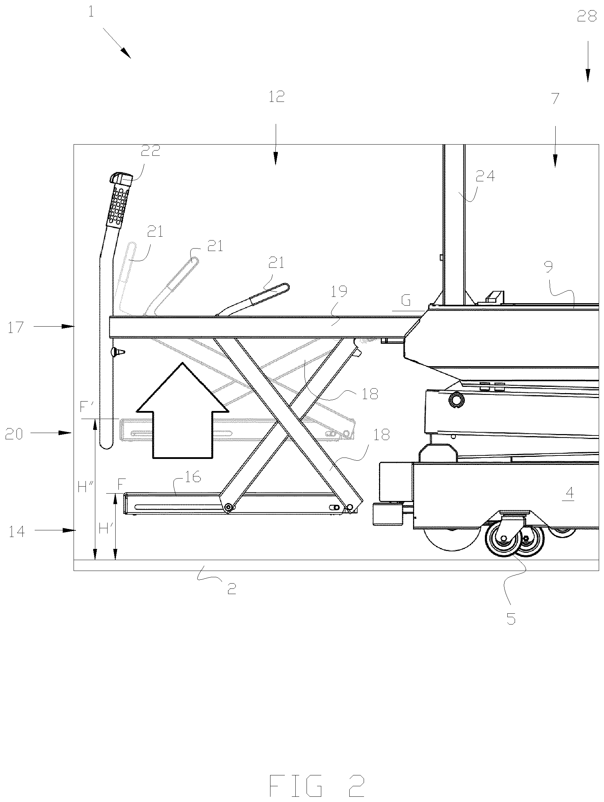

This setting of height F or F*'* of the floor part 16 is illustrated by way of example in figure 2 for two positions, while many other intermediate positions are obviously possible.

Therefore the floor part 16 of each lateral platform section 12 or 13 can be brought to level F or F*'*, or height H' or H" closer to the tubes 2 than the floor 9 of the central platform section 7.

Consequently, a person standing on a lateral platform section 12 or 13 brought into such a position can also comfortably work on the lower parts of plants in the horticultural greenhouse 3.

According to the invention such a lateral platform section 12 or 13 preferably forms a telescopic part that can be fully slid into the central platform section 7 of the tube rail cart 1 and slid out of it again.

This is also the case in the embodiment displayed in the figures, and to this end in this case the constructions above 17 can be slid into the central platform section 7 and extended from the central platform section 7.

More specifically, such a construction 17 can be slid into and out of the central platform section 7, when the corresponding floor part 16 is brought to the same level as the construction above 17 by fully folding in the relative scissor mechanism 18.

To be able to easily slide such a lateral platform section 12 or 13 in and out of the central platform section 7, each lateral platform section 12 and 13 is provided with a pair of handles 22, whereby each handle 22 is connected to a beam 19 of the construction above 17.

Such a lateral platform section 12 or 13 according to the invention is preferably also provided with a detachable lock with which the relative lateral platform section 12 or 13 can be locked in the completely withdrawn position of the lateral platform section 12 or 13 with respect to the central platform section 7 as well as in the fully extended position of the relative lateral platform section 12 or 13 with respect to the central platform section 7.

This is obviously of importance for the safe operation of the tube rail cart 1.

Furthermore, the tube rail cart 1 according to the invention also has provisions 23 for erecting a safety guard 24 for a person standing on the lateral platform section 12 or 13.

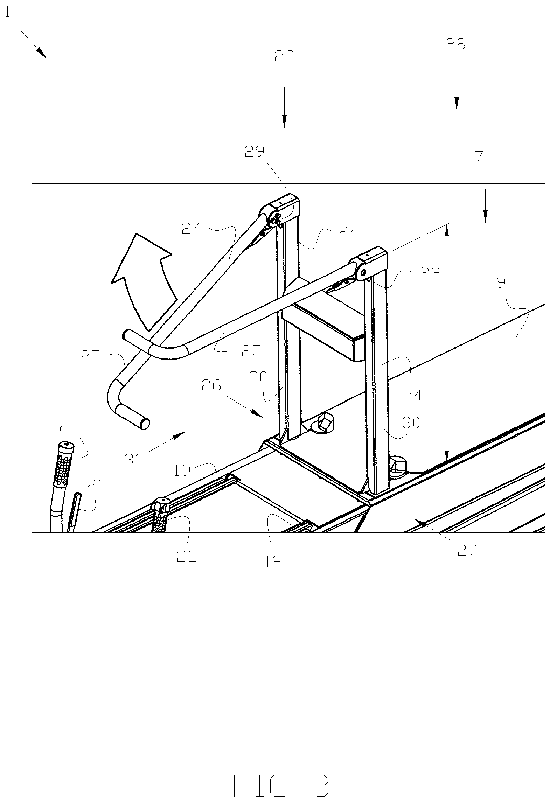

In one possible embodiment of a tube rail cart 1 according to the invention, said provisions 23 are suspended on the central platform section 7 and these provisions 23 are in two parts such as for example as shown in more detail in figure 3.

More specifically, these provisions 23 of each lateral platform 12 or 13 in this case two include L-shaped brackets 25 suspended on both sides 26 and 27 of the central part 28 of the tube rail cart 1.

The brackets 25 are connected at one end by a pivoted joint 29 to the front 14 of the central part 28 of the tube rail cart 1 for the lateral platform section 12 and at the rear 15 of the central part 28 for the lateral platform section 13.

More specifically, the brackets 25 with the pivoting end are suspended at a height I above the floor 9 of the central platform section 7, in this case on a pair of vertical posts 30 anchored in the floor 9 of the central platform section 7.

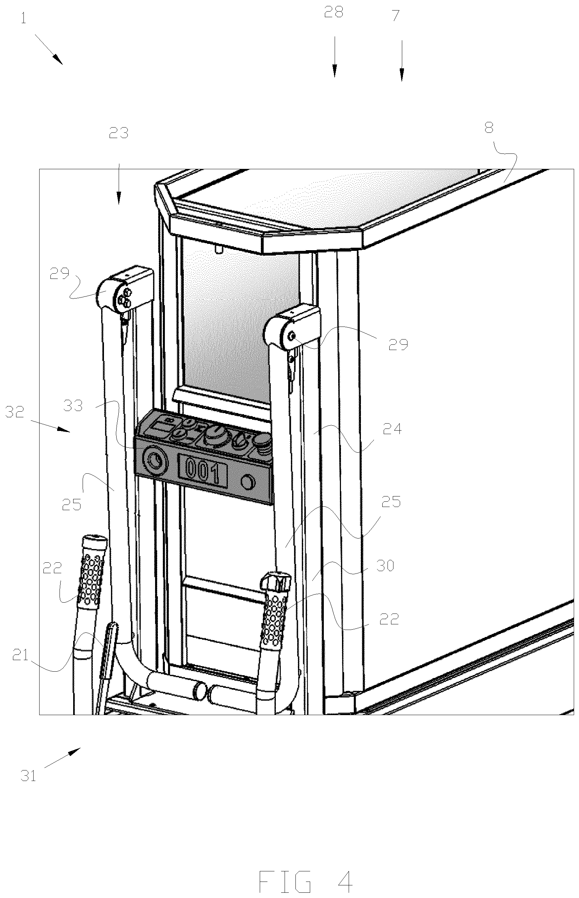

Consequently, the brackets 28 can be turned between a vertical position, shown in figure 4, whereby such a bracket 25 extends against the side 31 of the central part 27 of the tube rail cart 1, in this case according to the direction of the vertical posts 30, and a horizontal position, shown in figures 1 and 2, whereby such a bracket 24 extends in a horizontal position perpendicular to the said side 31 or of the posts 30 of the tube rail cart 1.

When both brackets 25 are brought into the horizontal position they form a barrier for a person standing on the floor part 16 of the lateral platform section 12 or 13, so the person cannot accidently fall off the relative platform section 12 or 13.

A tube rail cart 1 according to the invention is obviously also provided with control means 32 with which a person can control the tube rail cart 1 drive means.

According to the invention, for example in the floor part 16 of a lateral platform section 12 or 13 a pedal is preferably integrated with which the movement or stopping of the tube rail cart 1 can be controlled and that forms part of the control means of the tube rail cart 1.

This pedal is, however, not shown in the figures.

The tube rail cart 1 according to the invention is also preferably provided with a control panel 33 on the central part 28 of the tube rail cart 1, that is also simple to operate from the lateral platform section 12 or 13, in whatever position of this lateral platform section 12 or 13.

In this case such a control panel 33 is applied between the vertical posts 30 of the safety guard 24.

It is clear that the present invention also concerns an elevated platform.

The invention is by no means limited to the embodiments of a tube rail cart 1 described as an example and shown in the drawings, but such a tube rail cart 1 can be realized in all kinds of variants, without departing from the scope of the invention, within the limitations as provided by the appended claims.

## Claims

1. Tube rail cart (1) designed to ride over tubes (2) of a horticultural greenhouse (3), with these tubes (2) serving as rails, whereby the tube rail cart (1) is provided with a platform (6) on which a person can stand, drive means for advancing the tube rail cart (1) over the tubes (2) and control means (32) with which a person can control the drive means and whereby the platform (6) is provided with a safety guard (8), whereby the platform (6) has a central platform section (7) that can be moved up and down, **characterised in that** to the side of this central platform section (7) of the platform (6) at least one lateral platform section (12, 13) is provided having adjusting means (20) for moving the lateral platform section (12, 13) up and down, with these adjusting means (20) allowing the level (F, F') of the lateral platform section (12, 13) to be lowered to below the level (G) of the central platform section (7).

2. Tube rail cart (1) according to claim 1, **characterised in that** the adjusting means (20) allow the level (F,F') of the lateral platform section (12,13) to be lowered to below the level (G) of the central platform section (7) when the central platform section (7) is placed in the lowest position.

3. Tube rail cart (1) according to claim 1 or 2, **characterised in that** the lateral platform section (12,13) has a floor part (16) on which a person can stand, whereby a pedal is integrated in the floor part (16) with which the movement or stopping of the tube rail cart (1) can be controlled.

4. Tube rail cart (1) according to one or several of the previous claims, **characterised in that** the lateral platform section (12, 13) has a floor part (16) on which a person can stand, whereby the floor part (16) of the lateral platform section (12, 13) is suspended on a construction above (17) by means of a scissor mechanism (18).

5. Tube rail cart (1) according to claim 4, **characterised in that** the height (F,F*'*) of the floor part (16) with respect to the central platform section (7) can be set by means of a lever (21) that engages in the scissor mechanism (18) and whereby the scissor mechanism (18) collapses to a greater or lesser extent as the floor part (16) is brought either closer to or further from the construction above (17).

6. Tube rail cart (1) according to one or several of the previous claims, **characterised in that** the lateral platform section (12,13) forms a telescopic part (12, 13) that can be fully slid into the central platform section (28) of the tube rail cart (1) and slid out of it again.

7. Tube rail cart (1) according to claims 4 and 6, **characterised in that** the construction above (17) can be withdrawn into the central platform section (7) and extended out of the central platform section (7).

8. Tube rail cart (1) according to claim 7, **characterised in that** the construction above (17) can be withdrawn into and extended out of the central platform section (7) when the floor part (16) is brought to the same level as the construction above (17) by fully folding in the scissor mechanism.

9. Tube rail cart (1) according to one or several of the claims 6 to 8, **characterised in that** the lateral platform section (12, 13) has a detachable lock with which the lateral platform section (12, 13) can be locked in the entirely withdrawn position of the lateral platform section (12,13) with respect to the central platform section (7) and in the fully extended position of the lateral platform section (12,13) with respect to the central platform section (7).

10. Tube rail cart (1) according to one or several of the previous claims, **characterised in that** the tube rail cart (1) has provisions (23) for erecting a safety guard (24) for a person standing on the lateral platform section (12,13).

11. Tube rail cart according to claim 10, **characterised in that** the abovementioned provisions (23) are suspended on the central platform section (7) or the central part (28) of the tube rail cart (1).

12. Tube rail cart (1) according to claim 10 or 11, **characterised in that** the provisions (23) are in two parts.

13. Tube rail cart (1) according to claim 11 or 12, **characterised in that** the provisions (23) consist of two brackets (25) that are suspended on both sides (26, 27) of the central platform section (7) and that can be turned between a vertical position and a horizontal position, or a vertical position whereby such a bracket (25) extends against the side (31) of the central part (28) of the tube rail cart (1) and a horizontal position perpendicular to it.

14. Tube rail cart (1) according to claim 13, **characterised in that** when both brackets (25) are brought into the horizontal position they form a barrier for a person standing on the floor part (16) of the lateral platform section (12, 13), whereby the brackets (25) prevent the person from accidently falling off the relative platform section.

15. Tube rail cart (1) according to one or several of the previous claims, **characterised in that** the tube rail cart (1) is provided with a control panel (33) that is applied on the central part (28) of the tube rail cart (1), that is also simple to operate from the lateral platform section (12, 13) in whatever position of this lateral platform section (12, 13).

## Patentansprüche

1. Rohrschienenwagen (1), der dafür ausgelegt ist, über Rohre (2) eines Gartenbaugewächshauses (3) zu fahren, welche Rohre (2) als Schienen dienen, wobei der Rohrschienenwagen (1) mit einer Plattform (6) versehen ist, worauf eine Person stehen kann, mit Antriebsmitteln zum Voranbewegen des Rohrschienenwagens (1) über die Rohre (2), und mit Bedienungsmitteln (32), womit eine Person die Antriebsmittel bedienen kann, und wobei die Plattform (6) mit einem Sicherheitsgeländer (8) versehen ist, wobei die Plattform (6) einen zentralen Plattformabschnitt (7) aufweist, der auf- und abbewegt werden kann, **dadurch gekennzeichnet, dass** an der Seite dieses zentralen Plattformabschnitts (7) der Plattform (6) mindestens ein seitlicher Plattformabschnitt (12, 13) vorgesehen ist, der Einstellmittel (20) zum Auf- und Abbewegen des seitlichen Plattformabschnitts (12, 13) aufweist, welche Einstellmittel (20) das Absenken des Niveaus (F, F') des seitlichen Plattformabschnitts (12, 13) bis unter das Niveau (G) des zentralen Plattformabschnitts (7) gestatten.

2. Rohrschienenwagen (1) nach Anspruch 1, **dadurch gekennzeichnet, dass** die Einstellmittel (20) das Absenken des Niveaus (F, F') des seitlichen Plattformabschnitts (12, 13) bis unter das Niveau (G) des zentralen Plattformabschnitts (7) gestatten, wenn der zentrale Plattformabschnitt (7) in der niedrigsten Position platziert ist.

3. Rohrschienenwagen (1) nach Anspruch 1 oder 2, **dadurch gekennzeichnet, dass** der seitliche Plattformabschnitt (12, 13) ein Bodenteil (16) aufweist, worauf eine Person stehen kann, wobei ein Pedal in das Bodenteil (16) integriert ist, womit die Bewegung oder das Anhalten des Rohrschienenwagens (1) gesteuert werden kann.

4. Rohrschienenwagen (1) nach einem oder mehreren der vorhergehenden Ansprüche, **dadurch gekennzeichnet, dass** der seitliche Plattformabschnitt (12, 13) ein Bodenteil (16) aufweist, worauf eine Person stehen kann, wobei das Bodenteil (16) des seitlichen Plattformabschnitts (12, 13) mittels eines Scherenmechanismus (18) an einer darüber befindlichen Konstruktion (17) aufgehängt ist.

5. Rohrschienenwagen (1) nach Anspruch 4, **dadurch gekennzeichnet, dass** die Höhe (F, F') des Bodenteils (16) bezüglich des zentralen Plattformabschnitts (7) mittels eines Hebels (21) eingestellt werden kann, der in dem Scherenmechanismus (18) eingreift, und wobei der Scherenmechanismus (18) mehr oder weniger zusammengeklappt wird, je nachdem das Bodenteil (16) entweder dichter zu oder weiter weg von der darüber befindlichen Konstruktion (17) gebracht wird.

6. Rohrschienenwagen (1) nach einem oder mehreren der vorhergehenden Ansprüche, **dadurch gekennzeichnet, dass** der seitliche Plattformabschnitt (12, 13) ein teleskopartiges Teil (12, 13) bildet, das vollständig in den zentralen Plattformabschnitt (28) des Rohrschienenwagens (1) eingeschoben und wieder daraus ausgeschoben werden kann.

7. Rohrschienenwagen (1) nach Ansprüchen 4 und 6, **dadurch gekennzeichnet, dass** die darüber befindliche Konstruktion (17) bis in den zentralen Plattformabschnitt (7) eingeschoben und aus dem zentralen Plattformabschnitt (7) ausgeschoben werden kann.

8. Rohrschienenwagen (1) nach Anspruch 7, **dadurch gekennzeichnet, dass** die darüber befindliche Konstruktion (17) in den zentralen Plattformabschnitt (7) eingeschoben und daraus ausgeschoben werden kann, wenn das Bodenteil (16) durch das vollständig Einklappen des Scherenmechanismus bis auf dasselbe Niveau wie die darüber befindliche Konstruktion (17) gebracht ist.

9. Rohrschienenwagen (1) nach einem oder mehreren der vorhergehenden Ansprüche 6 bis 8, **dadurch gekennzeichnet, dass** der seitliche Plattformabschnitt (12, 13) eine lösbare Verriegelung aufweist, womit der seitliche Plattformabschnitt (12, 13) in der vollständig eingeschobenen Position des seitlichen Plattformabschnitts (12, 13) bezüglich des zentralen Plattformabschnitts (7) und in der vollständig ausgeschobenen Position des seitlichen Plattformabschnitts (12, 13) bezüglich des zentralen Plattformabschnitts (7) verriegelt werden kann.

10. Rohrschienenwagen (1) nach einem oder mehreren der vorhergehenden Ansprüche, **dadurch gekennzeichnet, dass** der Rohrschienenwagen (1) Einrichtungen (23) zum Errichten eines Sicherheitsgeländers (24) für eine auf dem seitlichen Plattformabschnitt (12, 13) stehende Person aufweist.

11. Rohrschienenwagen (1) nach Anspruch 10, **dadurch gekennzeichnet, dass** die vorgenannten Einrichtungen (23) an dem zentralen Plattformabschnitt (7) oder dem zentralen Teil (28) des Rohrschienenwagens (1) aufgehängt sind.

12. Rohrschienenwagen (1) nach Anspruch 10 oder 11, **dadurch gekennzeichnet, dass** die Einrichtungen (23) in zwei Teilen vorliegen.

13. Rohrschienenwagen (1) nach Anspruch 11 oder 12, **dadurch gekennzeichnet, dass** die Einrichtungen (23) aus zwei Bügeln (25) bestehen, die zu beiden Seiten (26, 27) des zentralen Plattformabschnitts (7) aufgehängt sind und die zwischen einer vertikalen Position und einer horizontalen Position verdreht werden können, oder einer vertikalen Position, wobei ein solcher Bügel (25) sich gegen die Seite (31) des zentralen Teils (28) des Rohrschienenwagens (1) erstreckt, und einer horizontalen Position senkrecht dazu.

14. Rohrschienenwagen (1) nach Anspruch 13, **dadurch gekennzeichnet, dass**, wenn beide Bügel (25) in die horizontale Position gebracht sind, sie eine Barriere für eine Person bilden, die auf dem Bodenteil (16) des seitlichen Plattformabschnitts (12, 13) steht, wobei die Bügel (25) ein versehentliches Herunterfallen der Person von dem betreffenden Plattformabschnitt verhindern.

15. Rohrschienenwagen (1) nach einem oder mehreren der vorhergehenden Ansprüche, **dadurch gekennzeichnet, dass** der Rohrschienenwagen (1) mit einem Bedienungspaneel (33) versehen ist, das an dem zentralen Teil (28) des Rohrschienenwagens (1) angebracht ist, das jedoch auch von dem seitlichen Plattformabschnitt (12, 13) aus in gleich welcher Position dieses seitlichen Plattformabschnitts (12, 13) einfach zu bedienen ist.

## Revendications

1. Chariot pour rails tubulaires (1) conçu pour se déplacer par-dessus des tubes (2) d'une serre horticole (3), ces tubes (2) servant de rails; dans lequel le chariot pour rails tubulaires (1) est muni d'une plate-forme (6) sur laquelle une personne peut se tenir debout ; deux moyens d'entraînement pour faire avancer le chariot pour rails tubulaires (1) par-dessus les tubes (2) et de moyens de commande (32) avec lesquels une personne peut commander les moyens d'entraînement ; et dans lequel la plate-forme (6) est équipée d'un dispositif de sécurité (8) ; dans lequel la plate-forme (6) possède un tronçon de plate-forme central (7) qui peut s'élever et s'abaisser, **caractérisé en ce que**, à côté de ce tronçon de plate-forme central (7) de la plate-forme (6), on prévoit au moins un tronçon de plate-forme latéral (12, 13) possédant des moyens de réglage (20) destinés à élever et abaisser le tronçon de plate-forme latéral (12, 13), ces moyens de réglage (20) permettant d'abaisser le niveau (F, F') du tronçon de plate-forme latéral (12, 13) jusqu'en dessous du niveau (G) du tronçon de plate-forme central (7).

2. Chariot pour rails tubulaires (1) selon la revendication 1, **caractérisé en ce que** les moyens de réglage (20) permettent d'abaisser le niveau (F, F') du tronçon de plate-forme latéral (12, 13) jusqu'en dessous du niveau (G) du tronçon de plate-forme central (7) lorsque le tronçon de plate-forme central (7) est placé dans sa position la plus basse.

3. Chariot pour rails tubulaires (1) selon la revendication 1 ou 2, **caractérisé en ce que** le tronçon de plate-forme latéral (12, 13) possède une partie (16) faisant office de plancher sur laquelle une personne peut se tenir debout ; dans lequel une pédale est intégrée dans la partie (16) faisant office de plancher avec laquelle le mouvement ou la mise à l'arrêt du chariot pour rails tubulaires (1) peut être commandé.

4. Chariot pour rails tubulaires (1) selon une ou plusieurs des revendications précédentes, **caractérisé en ce que** le tronçon de plate-forme latéral (12, 13) possède une partie (16) faisant office de plancher sur laquelle une personne peut se tenir debout ; dans lequel la partie (16) faisant office de plancher, du tronçon de plate-forme latéral (12, 13), est suspendue à une construction supérieure (17) au moyen d'un mécanisme à ciseaux (18).

5. Chariot pour rails tubulaires (1) selon la revendication 4, **caractérisé en ce que** la hauteur (F, F') de la partie (16) faisant office de plancher par rapport au tronçon de plate-forme central (7) peut être réglée au moyen d'un levier (21) qui vient s'engrener dans le mécanisme à ciseaux (18) ; et dans lequel le mécanisme à ciseaux (18) s'affaisse dans une mesure plus ou moins grande lorsque la partie (16) faisant office de plancher est amenée, soit plus près, soit plus loin par rapport à la construction supérieure (17).

6. Chariot pour rails tubulaires (1) selon une ou plusieurs des revendications précédentes, **caractérisé en ce que** le tronçon de plate-forme latéral (12, 13) forme une partie télescopique (12, 13) qui peut pénétrer complètement par coulissement dans le tronçon de plate-forme central (7) du chariot pour rails tubulaires (1) et en ressortir par coulissement.

7. Chariot pour rails tubulaires (1) selon les revendications 4 et 6, **caractérisé en ce que** la construction supérieure (17) peut être retirée jusque dans le tronçon de plate-forme central (7) et s'étendre hors du tronçon de plate-forme central (7).

8. Chariot pour rails tubulaires (1) selon la revendication 7, **caractérisé en ce que** la construction supérieure (17) peut être retirée jusque dans le tronçon de plate-forme central (7) et s'étendre hors du tronçon de plate-forme central (7) lorsque la partie (16) faisant office de plancher est amenée au même niveau que celui de la construction supérieure (17) par l'intermédiaire d'un pliage complet dans le mécanisme à ciseaux.

9. Chariot pour rails tubulaires (1) selon une ou plusieurs des revendications 6 à 8, **caractérisé en ce que** le tronçon de plate-forme latéral (12, 13) possède un verrou amovible avec lequel le tronçon de plate-forme latéral (12, 13) peut être verrouillé dans la position entièrement retirée du tronçon de plate-forme latéral (12, 13) par rapport au tronçon de plate-forme central (7) et dans la position complètement étendue du tronçon de plate-forme latéral (12, 13) par rapport au tronçon de plate-forme central (7).

10. Chariot pour rails tubulaires (1) selon une ou plusieurs des revendications précédentes, **caractérisé en ce que** le chariot pour rails tubulaires (1) possède des dispositions (23) pour le montage d'un dispositif de sécurité (24) pour une personne qui se tient debout sur le tronçon de plate-forme latéral (12, 13).

11. Chariot pour rails tubulaires (1) selon la revendication 10 ou 11, **caractérisé en ce que** les dispositions susmentionnées (23) sont suspendues sur le tronçon de plate-forme central (7) ou la partie centrale (28) du chariot pour rails tubulaires (1).

12. Chariot pour rails tubulaires (1) selon la revendication 10, **caractérisé en ce que** les dispositions (23) sont en deux parties.

13. Chariot pour rails tubulaires (1) selon la revendication 11 ou 12, **caractérisé en ce que** les dispositions (23) sont constituées par deux supports (25) qui sont suspendus des deux côtés (26,27) du tronçon de plate-forme central (7) et qui peuvent effectuer une rotation entre une position verticale et une position horizontale, ou une position verticale dans laquelle un tel support (25) s'étend contre le côté (31) de la partie centrale (28) du chariot pour rails tubulaires (1) et une position horizontale qui lui est perpendiculaire.

14. Chariot pour rails tubulaires (1) selon la revendication 13, **caractérisé en ce que**, lorsque les deux supports (25) sont amenés dans la position horizontale, ils forment une barrière pour une personne qui se tient debout sur la partie (16) faisant office de plancher, du tronçon de plate-forme latéral (12, 13) ; dans lequel les supports (25) empêchent la personne de tomber par accident du tronçon en question faisant office de plate-forme.

15. Chariot pour rails tubulaires (1) selon une ou plusieurs des revendications précédentes, **caractérisé en ce que** le chariot pour rails tubulaires (1) est équipé d'un tableau de commande (33) qui est appliqué sur la partie centrale (28) du chariot pour rails tubulaires (1), qui peut également être facilement actionné à partir du tronçon de plate-forme latéral (12, 13) dans n'importe quelle position de ce tronçon de plate-forme latéral (12, 13).
